# EUROPÄISCHE PATENTSCHRIFT

(11) **EP 0 961 041 B1**
(45) Veröffentlichungstag und Bekanntmachung des Hinweises auf die Patenterteilung: **14.08.2002**
(21) Anmeldenummer: 99107211.7
(22) Anmeldetag: 14.04.1999
(51) Int. Cl.: F16B 13/14

(54) **Verbundanker**
Compound anchor
Dispositif d'ancrage composite

(30) Priorität: 28.05.1998 DE 19823779
(43) Veröffentlichungstag der Anmeldung: 01.12.1999
(73) Patentinhaber: fischerwerke Artur Fischer GmbH & Co. KG, 72178 Waldachtal (DE)
(72) Erfinder: Mallée, Rainer Dr., 72178 Waldachtal (DE)

(56) Entgegenhaltungen:
- EP-A- 0 459 167
- EP-A- 0 763 665
- EP-A- 0 794 336
- DE-B- 2 423 433

## Beschreibung

Die Erfindung betrifft einen mittels Mörtelmasse in einem Bohrloch verankerbaren Verbundanker mit an seiner Mantelfläche angeordneten und einen Verbundbereich im Bohrloch bildenden Haltemitteln und einem außerhalb des Bohrloches liegenden Gewindeabschnitt.

Derartige Ankerstangen sind in der Regel mit einem durchgehenden Außengewinde oder im Verbundbereich mit einer anderen Profilierung, wie z.B. einer Rändelung oder umlaufenden Wulsten versehen. Die am Verbundanker angreifende Last wird über den Verbund der an der Ankerstange angeordneten Haltemitteln und der ausgehärteten Mörtelmasse einerseits sowie zwischen der Mörtelmasse und der Bohrlochwandung andererseits in den Ankergrund eingeleitet. Aufgrund der starken Profilierung beispielsweise einer Gewindestange als Verbundanker und der hohen Festigkeit der ausgehärteten Mörtelmasse wird die Last innerhalb einer relativ kurzen Verankerungslänge in die erhärtete Mörtelmasse übertragen. Dies führt zu deutlichen Verbundspannungsspitzen im Bereich der Bohrlochmündung, während aufgrund der Dehnung der Ankerstange die Lastaufnahme in Abhängigkeit von der Verankerungstiefe nahezu vollständig abnimmt. Aufgrund dieser ungünstigen Spannungsverteilung ergibt sich ein Verbundversagen schon bei geringeren Lasten.

Aus der DE-B-24 23 433 ist ein gattungsgemäßer Ankerbolzen bekannt, der an seiner den Verbundbereich bildenden Mantelfläche Metallborsten als Haltemittel aufweist. Die Metallborsten weisen ein Außenmaß auf, das größer ist als der Bohrlochdurchmesser, und sind zusätzlich in einem Winkel zur Achsrichtung des Ankerbolzens angeordnet. Beim Einschieben des Ankerbolzens in das Bohrloch streifen die Metallborsten an der Bohrlochwandung entlang und verhaken sich nach dem Setzen in den Aufrauungen der Bohrlochwandung. Bei einer am Ankerbolzen angreifenden Zuglast wird die Kraft über die Metallborsten in den Ankergrund eingeleitet, wobei durch die Schrägstellung der Borsten eine zusätzliche Spreizwirkung erzielt wird. Zur Erhöhung des auf einem mechanischen Verankerungsprinzip beruhenden Ausziehwiderstandes ist es aus der Druckschrift femer bekannt, die Metallborsten zur Erhöhung der Steifigkeit in eine aushärtende Masse einzubinden.

Desweiteren wird in der Druckschrift vorgeschlagen, die Anzahl der Metallborsten im Bereich des Bohrlochgrundes entweder durch Verringerung des Abstandes zwischen den einzelnen Borsten oder durch dickere Borstenbündel zu erhöhen. Dadurch ergibt sich die bei mechanisch verankerten Befestigungselementen übliche Spannungsverteilung in der Weise, dass die Höchstspannung im Bereich des Bohrlochgrunds auftritt.

Bei der Verankerung eines Verbundankers beruht die Verankerungswirkung ausschließlich auf der Verbundspannung zwischen der Verbundmasse und der Bohrlochwandung, die auf der gesamten Länge des Bohrloches gleich ist. Dadurch entstehen bei der Belastung eines Verbundankers keine Spreizdruckkräfte, die zu Beschränkungen im Anwendungsbereich führen.

Der Erfindung liegt die Aufgabe zugrunde, einen mittels Mörtelmasse in einem Bohrloch spreizdruckfrei verankerbaren Verbundanker in der Weise auszubilden, dass eine gleichmäßige Spannungsverteilung über die gesamte Verankerungslänge zur Erzielung höherer Haltewerte erreicht wird.

Die Lösung der Aufgabe wird durch die Merkmale des Anspruches 1 erreicht. Durch die Verkürzung der Abstände der den Verbundbereich bildenden Haltemittel in Richtung Bohrlochgrund wird die auf den Verbundanker einwirkende Last im Bereich der Bohrlochmündung geringer und im Bereich des Bohrlochgrundes stärker in die ausgehärtete Mörtelmasse und damit in den Ankergrund eingeleitet. In Verbindung mit der sich im Bereich der Bohrlochmündung stärker auswirkenden Dehnung der Ankerstange gegenüber dem tiefer sitzenden Teil der Ankerstange ergibt sich eine gleichmäßige Verteilung der Verbundspannung auf die gesamte Länge des im Bohrloch verankerten Verbundbereichs. Durch Vermeidung von Spannungsspitzen im Bereich der Bohrlochmündung und der auf der gesamten Länge des Verbundbereichs gleichmäßig in den Ankergrund eingeleiteten Last können bei gleicher Verankerungslänge gegenüber den üblichen Gewindestangen höhere Lasten übertragen werden, oder es sind bei gleichen Lasten geringere Einbautiefen der Ankerstange erforderlich, was wiederum Kostenvorteile durch eine kürzere Ankerstange, geringeres Mörtelvolumen und kürzere Montagezeit ermöglicht.

Eine sehr günstige Spannungsverteilung ergibt sich, wenn die Verkürzung des Abstandes zwischen den Haltemitteln entsprechend einem konstanten Faktor von 0,7 bis 0,9 oder logarithmisch erfolgt.

Zweckmäßigerweise sind die Haltemittel als die Mantelfläche des Verbundankers radial überragende, vorzugsweise rechtwinklig zur Längsachse umlaufende Wulste ausgebildet. Femer kann in einer weiteren Ausgestaltung der Erfindung der radiale Überstand der Haltemittel in Richtung Bohrlochgrund zunehmen. Damit kann die Lasteinleitung im Bereich des Bohrlochgrundes zusätzlich noch verstärkt werden um den Verbund im Bereich der Bohrlochmündung noch mehr zu entlasten.

In der Zeichnung ist anhand eines Ausführungsbeispiels und im Vergleich zu einer herkömmlichen Gewindestange die Erfindung dargestellt. Es zeigen:
- Figur 1: eine herkömmliche Gewindestange mit Darstellung der Spannungsverteilung und
- Figur 2: der erfindungsgemäße Verbundanker ebenfalls mit Darstellung der Spannungsverteilung.

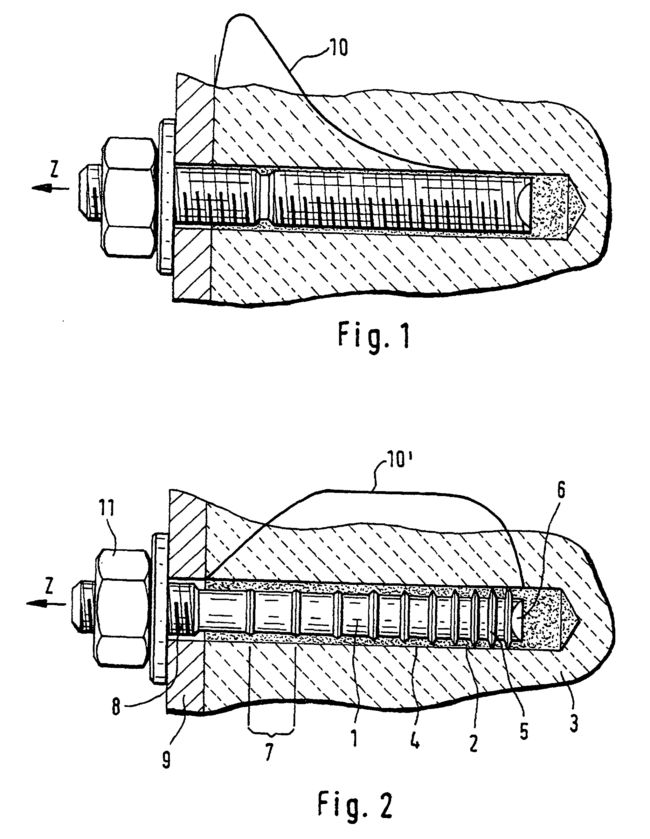

Figur 1 zeigt einen herkömmlichen als Gewindestange ausgeführten Verbundanker, der in einem Bohrloch eines Ankergrunds verankert ist. Die Kurve 10 zeigt den Spannungsverlauf bei einem Lastangriff Z an der Gewindestange. Anhand des Kurvenverlaufs ist erkennbar, daß im Bereich der Bohrlochmündung Spannungsspitzen auftreten, während die Lastaufnahme in Richtung Bohrlochgrund nahezu vollständig abnimmt.

Demgegenüber ergibt sich bei dem Ausführungsbeispiel der Erfindung gemäß Figur 2 eine auf die gesamte Länge des Verbundankers 1 weitestgehend gleichmäßige Spannungsverteilung gemäß der Kurvenlinie 10' in Figur 2.

Der Verbundanker 1 gemäß Figur 2 ist in einer Bohrung 2 eines Ankergrunds 3 eingesetzt und durch eine nach Vermischung der Komponenten ausgehärteten Mörtelmasse 4 in dem Bohrloch 2 fest verankert. Der Durchmesser des Bohrloches 2 entspricht mindestens dem größten Durchmesser der als umlaufende und die Mantelfläche der Ankerstange 1 radial überragenden Wulste ausgebildeten Haltemittel 5. Zur besseren Vermengung der Komponenten der Mörtelmasse ist der Verbundanker 1 an seinem vorderen Ende mit einer keilförmigen Schneide 6 versehen. Um eine gleichmäßige Spannungsverteilung entsprechend der Kurvenlinie 10' zu erhalten, sind die Haltemittel 5 am Verbundanker in einem Abstand 7 zueinander angeordnet, der sich beginnend im Bereich der Bohrlochmündung stetig in Richtung Bohrlochgrund verkürzt. Die Verkürzung des Abstandes 7 erfolgt entsprechend einem konstanten Faktor, der vorteilhafterweise zwischen 0,7 und 0,9 liegt. Dadurch ergibt sich eine Häufung der Anzahl der Haltemittel 5 in Richtung Bohrlochgrund, die eine stärkere Einleitung der Last im Bereich des Bohrlochgrundes und eine geringere Einleitung im Bereich der Bohrlochmündung ermöglicht. Aufgrund der sich stärker auswirkenden Dehnung der aus Stahl bestehenden Ankerstange in Richtung Lastangriff ergibt sich in Verbindung mit der geringeren Lasteinleitung im Bereich der Bohrlochmündung eine Reduzierung der Spannung in diesem Bereich und eine Erhöhung der Spannung im Bereich des Bohrlochgrundes. Im dargestellten Ausführungsbeispiel weisen die die Haltemittel 5 bildenden umlaufenden Wulste einen in Richtung Bohrlochgrund zunehmenden Durchmesser auf. Mit dieser Gestaltung ist eine weitere Beeinflussung des Kurvenverlaufs 10' in der Weise möglich, daß gegebenenfalls sogar im Bereich des Bohrlochgrundes eine Spannungserhöhung zur weiteren Entlastung im Bereich der Bohrlochmündung möglich ist.

Der nach der Verankerung den Ankergrund überragende Abschnitt der Ankerstange 1 weist einen Gewindeabschnitt 8 zur Befestigung eines Gegenstandes 9 mit einer Mutter 11 auf.

## Patentansprüche

1. Verbundanker (1) mit einem außerhalb des Bohrloches liegenden Gewindeabschnitt, der mittels einer Mörtelmasse (4) im Bohrloch (2) verankerbar ist und an seiner Mantelfläche einen Verbundbereich im Bohrloch bildende Haltemittel (5) aufweist, die in einem Abstand (7) zueinander am Verbundanker (1) angeordnet sind, der sich beginnend von der Bohrlochmündung in Richtung Bohrlochgrund verkürzt, **dadurch gekennzeichnet, dass** sich der Abstand (7) entsprechend einem konstanten Faktor < 1 verkürzt und dass die Haltemittel (5) die Mantelfläche des Verbundankers (1) radial überragende umlaufende Wulste sind.

2. Verbundanker nach Anspruch 1, **dadurch gekennzeichnet, dass** der konstante Faktor zwischen 0,7 und 0,9 liegt.

3. Verbundanker nach Anspruch 1, **dadurch gekennzeichnet, dass** die Verkürzung des Abstandes logarithmisch erfolgt.

4. Verbundanker nach Anspruch 1, **dadurch gekennzeichnet, dass** der radiale Überstand der an der Mantelfläche des Verbundankers (1) angeordneten Haltemittel (5) in Richtung Bohrlochgrund zunimmt.

## Claims

1. Composite anchor (1) having a threaded portion located outside the drilled hole, which anchor (1) is anchorable in the drilled hole (2) by means of a mortar composition (4) and has, on its outer surface, holding means (5) forming a bonding region in the drilled hole, which holding means (5) are arranged on the composite anchor (1) at spacings (7) from one another that, starting from the mouth of the drilled hole, decrease in the direction of the bottom of the drilled hole, **characterised in that** the spacings (7) decrease according to a constant factor of < 1; and the holding means (5) are encircling protuberances which project out radially from the outer surface of the composite anchor (1).

2. Composite anchor according to claim 1, **characterised in that** the constant factor is from 0.7 to 0.9.

3. Composite anchor according to claim 1, **characterised in that** the spacings decrease logarithmically.

4. Composite anchor according to claim 1, **characterised in that** the radial projection of the holding means (5) arranged on the outer surface of the composite anchor (1) increases in the direction of the bottom of the drilled hole.

## Revendications

1. Dispositif d'ancrage composite (1) avec un segment fileté disposé à l'extérieur de l'alésage, qui peut être ancré dans l'alésage (2) à l'aide d'une matière de mortier (4) et qui comporte au niveau de sa surface chemisée des moyens de fixation (5) formant une zone composite dans l'alésage, qui sont disposés à une certaine distance (7) les uns par rapport aux autres sur le dispositif d'ancrage composite (1), qui se rétrécit en partant de l'embouchure de l'alésage en direction du fond de l'alésage, **caractérisé en ce que** la distance (7) diminue en fonction d'un facteur constant inférieur à 1 et **en ce que** les moyens de fixation (5) sont des bourrelets faisant le tour et dépassant radialement de la surface chemisée du dispositif d'ancrage composite (1).

2. Dispositif d'ancrage composite selon la revendication 1, **caractérisé en ce que** le facteur constant est compris entre 0,7 et 0,9.

3. Dispositif d'ancrage composite selon la revendication 1, **caractérisé en ce que** la diminution de l'espacement s'opère de façon logarithmique.

4. Dispositif d'ancrage composite selon la revendication 1, **caractérisé en ce que** le dépassement radial des moyens de fixation (5) disposés au niveau de la surface chemisée du dispositif d'ancrage composite (1) augmente en direction du fond de l'alésage.
